Europäisches Patentamt

**European Patent Office**

**Office européen des brevets**

(19)

(11) Publication number: **0 133 192**
**A1**

# (12) EUROPEAN PATENT APPLICATION

(21) Application number: **84102030.8**

(22) Date of filing: **27.02.84**

(51) Int. Cl.⁴: **F 01 L 1/14, B 23 P 11/00**

(30) Priority: **05.08.83 US 520782**

(43) Date of publication of application: **20.02.85**
**Bulletin 85/8**

(84) Designated Contracting States: **DE FR GB SE**

(71) Applicant: **CHRYSLER CORPORATION, 12000 Oakland Avenue, Highland Park Michigan 48203 (US)**

(72) Inventor: **Corwin, John M., 703 Mt. Vernon Blvd., Royal Oak Michigan 48073 (US)**

(74) Representative: **Dipl.-Ing. H. Hauck Dipl.-Phys. W. Schmitz Dipl.-Ing. E. Graalfs Dipl.-Ing. W. Wehnert Dr.-Ing. W. Döring, Mozartstrasse 23, D-8000 München 2 (DE)**

(54) **Ceramic faced engine tappet and its method of electroforming.**

(57) An improved method of electromagnetic forming a ceramic member to the end of a metallic member by the utilization of a metal sleeve which fits over the ceramic-metal joint formed by the two pieces to be joined. The metal sleeve traps the ceramic and the metal pieces together in one electromagnetic forming operation.

EP 0 133 192 A1

ACTORUM AG

CERAMIC FACED ENGINE TAPPET AND ITS METHOD OF ELECTROFORMING

## BACKGROUND AND SUMMARY OF THE INVENTION

Monolithic ceramic, high carbide content powdered metal, cast metal wear resistant alloy and other metallic and non-metallic materials have been considered as wear surfaces for engine valve train tappets, rocker arms and finger followers. In each of these cases the method proposed to attach the wear resistant material to valve train parts has introduced additional piece costs and manufacturing complexity.

The subject of this invention is a re-designed tappet modified to permit attachment of the wear face through the use of a sleeve electromagnetically formed around the tappet body and wear face so as to firmly attach the two pieces together. This method offers manufacturing process and piece cost advantages over the more conventional braze, solder or adhesive bonding or shrink fitting techniques.

Examples of the prior art can be found in United Kingdom Patent Application No. 2,093,554A and in U.S. Patent No. 4,366,785.

The basics of the method employed can be found in U.S. Patent No. 4,261,092.

Factors and features thought to be critical in the electromagnetic forming method when applied to a typical

-1-

0133192

hydraulic tappet body include the physical and mechanical properties of the sleeve, sleeve thickness, diametric differences between the sleeve, tappet wear pad and tappet body, the thickness of the wear pad and the clamping angles on the tappet body and wear pad outside diameter in the sleeve contact zone. This latter feature controls the clamping force normal to the plane of the wear pad face. Electromagnetic forming of the sleeve when ceramic or other brittle material wear pads are employed incorporates the principals described in U.S. Patent No. 4,261,092 entitled "Method of Electroforming a Metallic Sleeve and Ceramic Shaft Joint".

## BRIEF DESCRIPTION OF THE DRAWINGS

Fig. 1 is an exploded view of the tappet body sleeve and ceramic scuff disc.

Fig. 2 is a partial cut-away view of the assembly of the tappet body, ceramic scuff disc and sleeve after electromagnetic deformation.

Fig. 3 is another partial cut-away view of the assembly of the ceramic scuff disc and the tappet body. Also shown in partial cut-away is the sleeve before and after electromagnetic deformation.

## DETAILED DESCRIPTION OF THE PREFERRED EMBODIMENT

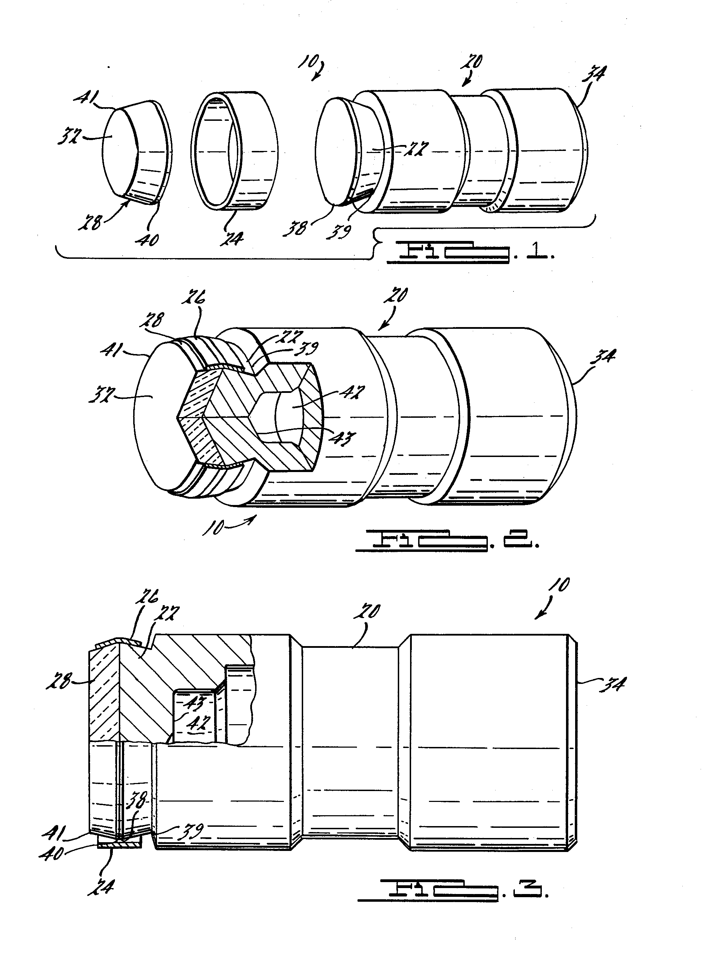

Referring to Fig. 1, the invented process is described with respect to the mating of a ceramic scuff disc 28 to a metallic engine tappet 20 with the application of a cylindrical metal sleeve 24 about the mated ceramic disc and

-2-

metallic tappet assembly 10. Not shown in this application but more fully described in U.S. 4,261,092 are shock wave absorbing pads which are employed at the ends of the assembly 10, if necessary, to prevent cracking of the ceramic during electromagnetic deformation of the sleeve 24. The purpose of the pads is to absorb shock waves which are propagated in the longitudinal direction in the assembly. The need for the pads is a function of the fracture toughness, elastic modulus, strength and internal friction properties of the ceramic. The pads, if needed, would sit on one or both ends of engine tappet assembly 10 either on ceramic face 32 or engine tappet end 34 or both. Another possible location for a pad is at the bottom 43 of the tappet body bore 42. Also not shown but a necessary part of the method described is some form of solid-bed supporting structure and powered ram. One end of the assembly 10 will be supported by the solid support bed and the other will be in contact with the powered ram. The ram can be placed into position to apply a desired compressive longitudinal load to the assembly 10 without interfering with the operation of the remainder of the electromagnetic deformation process. This is also disclosed in U.S. Patent 4,261,092.

The first step in the subject method involves the forming of a work surface at the end of the metal workpiece or tappet. The preferred shape of the working surface on the end of the tappet is a frustum 22 having two end planes, one small 39 and one large 38. The small end plane 39 being located at the end of the metal workpiece 20 and the large end plane 38 being available for mating with the ceramic scuff disc 28.

The ceramic scuff disc 28 is also formed in the shape of a frustum having two end planes, one small 41 and one large 40. Although the frustum shape is believed to be the most ideal to enhance the mating of the disc 28 and metal frustum 22, other shapes are also possible. The advantage accrues in that when the metal sleeve 24 is electromagnetically formed around both frustum pieces 22 and 28, the sleeve is deformed around the shape of the frustum and forms a clamping angle force on both frustums thereby urging the mating of the frustums.

The next step of the method includes forming of mating surfaces on the large end planes of the metal workpiece frustum 22 and on the ceramic scuff disc frustum 28. The two mating surfaces are then placed next to each other and a metal sleeve 24 is placed over the peripheral edge which is formed by the juxtaposed mating surfaces of the frustums.

The assembly 10 is then inserted between the powered ram and the solid support structure, using shock absorbing pads on one or both ends of the assembly 10 if necessary. A predetermined axial load is then applied to the assembly 10 in an amount greater than the axial loads caused by the sudden compression of the ceramic material during the electromagnetic deformation.

The last step involves the electromagnetic deformation of the metallic sleeve in such a way that the sleeve conforms to the shapes of the frustums on the ceramic disc and the metal workpiece thereby trapping the ceramic disc to the end of the metal tappet frustum. The metal sleeve 24

-4-

can be formed from suitable metallic materials which are electrically conductive.

As described in U.S. Patent 4,261,092, the electromagnetic deformation equipment includes a torodial conductive coil which surrounds the metal sleeve 24 in close proximity thereto. The metallic coil has electrical leads extending therefrom which will be connected to a source of electrical energy such as a capacitor bank. Upon transferring a large quantity of electrical energy from the bank to the electrical coil over a short period, a magnetic field is created, which interacts electromagnetically with the metal sleeve and thereby produces a magnetic pressure on the metal sleeve sufficient to swage or form the sleeve member tightly against the periphery of both the ceramic scuff disc 28 and metallic tappet frustum 22.

Figs. 2 and 3 illustrate the tappet assembly in completed form. Fig. 3 also shows metal sleeve in a preforming 24 and a post-forming 26 condition.

0133192

WHAT IS CLAIMED IS:

1.  A method of joining a ceramic scuff disc to an end
of a metal workpiece comprising the steps of:

    forming a frustum at the end of the metal workpiece; the frustum having two end planes, one small and one large; the small end plane of the frustum being located at the end of the metal workpiece and the large end plane of the frustum being available for mating with the ceramic scuff disc;

    forming a frustum at one end of the ceramic scuff disc; the frustum having two end planes, one small and one large;

    forming mating surfaces on the large end planes of the metal workpiece frustum and of the ceramic scuff disc frustum;

    mating the ceramic scuff disc with the metal workpiece by joining the respective mating surfaces;

    placing a metal sleeve over the peripheral edge formed by the juxtaposed mating surfaces;

    applying a predetermined compressive longitudinal load to the assembly formed by the ceramic scuff disc and the metal workpiece;

    electromagnetically deforming the metallic sleeve such that the sleeve conforms to the shapes of the frustums on the ceramic
disc and the metal workpiece thereby
trapping the ceramic disc to the end of
the metal workpiece.

2.    The method of Claim 1 further comprising:
the placing of a first shock absorbing
      pad on the small end plane of the
      ceramic disc frustum prior to application of a compressive longitudinal load; the
      pad being adapted to absorb shock waves
      propagated in the longitudinal direction in the
      assembly now made up of the first shock
      absorbing pad, the ceramic scuff disc
      and the metal workpiece; the need of the
      pad being a function of the elastic modulus,
      strength, fracture toughness and internal
      friction properties of the ceramic.

3.    The method of Claim 2 further comprising:
the placing of a second shock absorbing
      pad means on at least one of the surfaces of
      the metal workpiece longitudinally opposite to
      the metal workpiece frustum prior to
      application of a compressive longitudinal load;
      the pad being adapted to absorb shock waves
      propagated in the longitudinal direction in the
      assembly now made up of the first shock
      absorbing pad, the ceramic disc, the metal
      work-piece and the second shock absorbing pad means; the need of the pad and pad means being a function of the elastic modulus, strength, fracture toughness and internal friction properties of the ceramic.

4. The method of Claim 1 wherein said predetermined compressive longitudinal load is greater than the tensile longitudinal loads caused by the sudden radial compression of the ceramic material during the electromagnetic deformation.

5. The method of Claim 2 wherein said predetermined compressive longitudinal load is greater than the tensile longitudinal loads caused by the sudden radial compression of the ceramic material during the electromagnetic deformation.

6. The method of Claim 3 wherein said predetermined compressive longitudinal load is greater than the tensile longitudinal loads caused by the sudden radial compression of the ceramic material during the electromagnetic deformation.

7. An engine tappet which comprises:
   a metal tappet body with a frustum formed on one end thereof; the frustum having two end planes, one large and one small; the small end plane being located at the end of the metal tappet body; a frustum shaped ceramic scuff disc having two end planes, one large and one small;

mating surfaces on the large end planes
of each frustum;
a peripheral edge formed by the juxtaposition of the mating surfaces;
a metallic sleeve placed in form-fitted and
tight engagement on the peripheral
edges of the frustums by compressive
longitudinal pre-loading of the tappet body
and ceramic scuff disc and by electromagnetic
deformation of the metallic sleeve.

8.  The engine tappet of Claim 7 wherein:
a shock absorbing pad is placed on the ceramic
frustum disc prior to the compressive
longitudinal pre-loading; the pre-loading now
being applied to the pad, the ceramic disc and
the tappet body; the pad being adapted
to absorb shock waves propagated
in the longitudinal direction of the
tappet body during electromagnetic forming
the need of the pad being a function of
the elastic modulus, strength, fracture
toughness and internal friction properties of
the ceramic.

9.  The engine tappet of Claim 8 wherein:
a shock absorbing pad is placed on at least one of
the surfaces of the metallic tappet
longitudinally opposite to the ceramic disc
prior to the compressive longitudinal pre-
loading; the pre-loading now being applied to

the pads, the ceramic disc and the tappet
body; the pad being adapted to absorb shock
waves propagated in the longitudinal direction
of the tappet body during electromagnetic
forming; the need of the pad being a function
of the elastic modulus, strength, fracture
toughness and internal friction properties of
the ceramic.

10.    The method of Claim 1 wherein the end planes of at
least one of the frustums are equal in size.

11.    The method of Claim 2 wherein the end planes of at
least one of the frustums are equal in size.

12.    The method of Claim 3 wherein the end planes of at
least one of the frustums are equal in size.

13.    The method of Claim 4 wherein the end planes of at
least one of the frustums are equal in size.

14.    The method of Claim 5 wherein the end planes of at
least one of the frustums are equal in size.

15.    The method of Claim 6 wherein the end planes of at
least one of the frustums are equal in size.

16.    The engine tappet of Claim 7 wherein the end
planes of at least one of the frustums are equal in size.

17.    The engine tappet of Claim 8 wherein the end
planes of at least one of the frustums are equal in size.

18. The engine tappet of Claim 9 wherein the end planes of at least one of the frustums are equal in size.

FIG. 1.

FIG. 2.

FIG. 3.

0133192

European Patent Office

**EUROPEAN SEARCH REPORT**

. Application number

EP 84 10 2030

## DOCUMENTS CONSIDERED TO BE RELEVANT

| Category | Citation of document with indication. where appropriate, of relevant passages | Relevant to claim | CLASSIFICATION OF THE APPLICATION (Int. Cl.4) |
|---|---|---|---|
| Y | US-A-1 551 948 (GERMONPREZ) * Page 1, lines 38-59; page 2, line 112 - page 3, line 6; figures 3,5 * | 1-18 | F 01 L 1/14 B 23 P 11/00 |
| | --- | | |
| D,Y | US-A-4 261 092 (CHRYSLER) * Column 2, line 35 - column 3, line 7; column 1, line 65 - column 2, line 14; figures 1,2 * | 1-18 | |
| | --- | | |
| D,A | US-A-4 366 785 (GOLOFF) | | |
| | --- | | |
| D,A | GB-A-2 093 554 (STANADYNE) | | |
| | --- | | TECHNICAL FIELDS SEARCHED (Int. Cl.4) |
| A | US-A-2 426 083 (CORLETT) | | F 01 L |
| | ----- | | |

The present search report has been drawn up for all claims

| Place of search THE HAGUE | Date of completion of the search 31-10-1984 | Examiner KOOIJMAN F.G.M. |
|---|---|---|

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82